Europäisches Patentamt

European Patent Office

Office européen des brevets

(11) Numéro de publication : **0 497 656 A1**

(19)

# (12) DEMANDE DE BREVET EUROPEEN

(21) Numéro de dépôt : **92400148.0**

(22) Date de dépôt : **21.01.92**

(51) Int. Cl.⁵ : **B29C 51/18, G11B 23/023**

(30) Priorité : **01.02.91 FR 9101157**
**30.12.91 FR 9116295**

(43) Date de publication de la demande :
**05.08.92 Bulletin 92/32**

(84) Etats contractants désignés :
**DE ES GB IT NL**

(71) Demandeur : **Barraud, Jean-Claude**
**Z.I. de la Pontchonniere, B.P. 49**
**F-69592 Savigny, L'Arbresle (FR)**

(72) Inventeur : **Barraud, Jean-Claude**
**Z.I. de la Pontchonniere, B.P. 49**
**F-69592 Savigny, L'Arbresle (FR)**

(54) **Nouveau dispositif de fabrication de boitiers vidéo-cassettes en plastique thermoformé.**

(57)    La présente invention concerne un nouveau dispositif de fabrication automatique de boîtiers vidéo-cassettes par thermoformage avec photo quadrichromie.

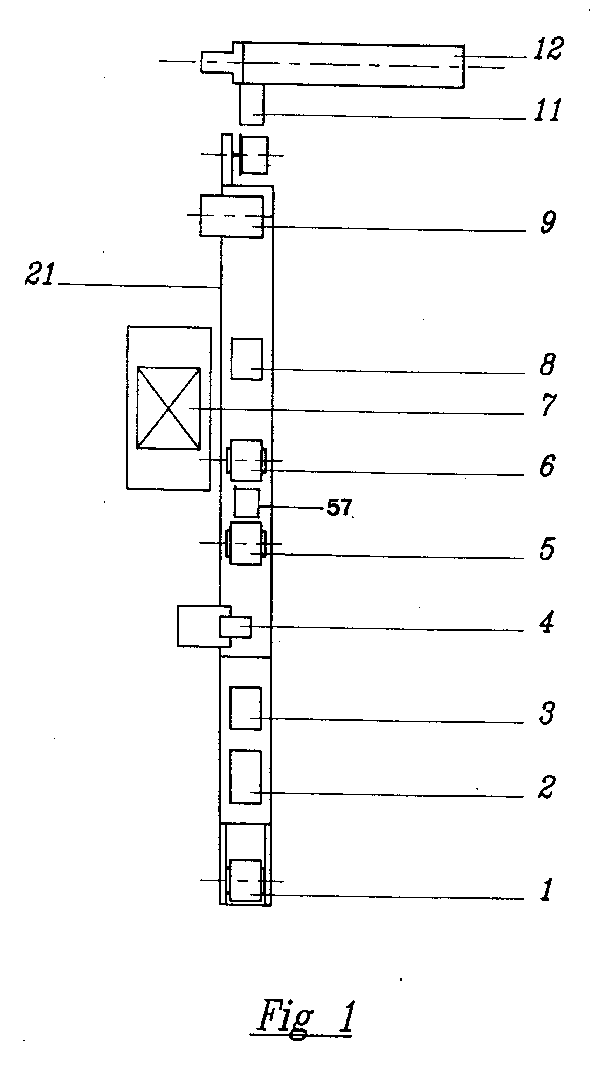

Selon la figure 1, l'invention est caractérisée par un ensemble d'appareillages comprenant une alimentation de polyvinyle ou polystyrène (1), un poste de préchauffage différentiel (2), un poste de thermoformage par poussées (3), un refroidisseur, un distributeur de dosserets (4), l'impression et le placement d'une photo quadrichromie (57) sur le boîtier, le poste de découpage du boîtier piloté par une commande électrique fonctionnant en continu, la soudure par haute fréquence (8), l'extraction des déchets obtenue par un enrouleur sous tension mécanique (9).

L'invention est utilisée dans l'industrie du conditionnement.

*Fig 1*

La présente invention dénommée : "Nouveau dispositif de fabrication de boîtiers vidéo cassettes ou assimilés en plastique thermoformé" concerne une série d'adaptations homogènes, qui sont réunis sur une chaîne automatique de fabrication de boîtiers.

Cette chaîne se présente sous forme linéaire, où les différentes opérations de formage, moulage, incorporation des plaquettes cartonnées, soudage, découpage, ont reçus des perfectionnements particuliers connus ou peu connus, qui réunis constituent une invention homogène et qui permettent d'obtenir une qualité et une cadence de fabrication, supérieures à celles connues à ce jour.

Jusqu'à présent les différentes opérations de réalisation de ce type de boîtiers étaient obtenues manuellement par un ou plusieurs ouvriers qui pour chaque opération positionnaient la matière transformée en boîtier au dessus de la presse à thermoformer, plaçaient à la main le cartonnage de renfort, replaçaient l'ensemble sous la soudeuse, et disposaient le tout sous la découpeuse. On séparait manuellement les bavures encore attachées aux boîtiers avant de les refermer et de les stocker après avoir été convoyés.

Ces dispositions avaient pour conséquence de limiter considérablement la cadence de fabrication et altéraient la qualité finale du boîtier.

La présente invention dénommée "Nouveau Dispositif de fabrication de boîtiers vidéo-cassettes en plastique thermoformé" est caractérisée en ce qu'elle comporte une alimentation de plastique polyvinyle ou polystyrène non polymérisé, un poste de préchauffage différentiel, un poste de thermoformage à double poussée, un circuit de refroidissement du plastique, un distributeur de dosserets rigides, un poste de dorure ou de placement de photo quadrichromie, un poste de découpage du boîtier sous tension mécanique, un circuit de fonctionnement continu de l'ensemble destiné à maintenir la cadence, un poste de soudure à haute fréquence, une plieuse, un extracteur de plastique non utilisé sur un enrouleur maintenu sous tension mécanique constante.

L'invention ainsi définie présente de nombreux avantages et notamment :

– Une fiabilité de fonctionnement en continu même en cas de boîtiers ratés.

– Une cadence de fonctionnement élevée.

– Un réglage facile du fonctionnement.

– Une adaptation à tous les plastique thermoformables.

L'invention sera mieux comprise grâce aux dessins annexés qui ne sont présentés qu'à titre indicatif dans une réalisation préférentielle réalisée par l'homme de l'art.

L'invention est un ensemble d'ménagements techniques dont certains sont connus mais qui réunis, constituent une invention nouvelle.

La figure 1 représente le schéma synoptique de l'ensemble du dispositif.

La figure 2 représente la partie de chauffage différentiel associé à la réserve de plastique thermoformable, et la partie de thermoformage par aspiration et poussée.

La figure 3 représente les postes de distribution de plaquettes de cartonnage avec l'adaptation d'une dorure à chaud ou la mise en place d'une photo quadrichromie au moyen d'un robot, de la mise sous tension mécanique du ruban vidéo cassette thermoformé, et du poste de soudage de l'ensemble.

La figure 4 représente le découpage des boîtiers, leur pliage, associé à la sécurité de tension d'extraction, l'embobinage des déchets sur un tambour sous tension mécanique.

Les figures 5, 6, 7, 8, 9 de la planche V représentent les opérations de réalisation du boîtier.

En se reportant à la figure 1 et suivant une caractéristique de l'invention on a représenté les différentes postes de fabrication des boîtiers vidéo-cassettes selon un arrangement linéaire.

Le poste 1 représente la bobine de polyvinyle plastique monté sur un arbre tournant et qui se déroule à la cadence de fabrication. Le polyvinyle chaud est tiré jusqu'au poste 3 où il subit un thermoformage imprimant le fond du boiter. Ce thermoformage est obtenu par une matrice qui forme en une seule opération le fond et le couvercle du boîtier ouvert, selon le profil de la cassette. Le fond du boîtier est ensuite, par extraction, acheminé au poste 4 où il reçoit sur ses épaulements les plaques de carton servant à renforcer la face extérieure du boîtier.

L'ensemble, fond du dossier ouvert, garni de ses deux cartonnages reçoit successivement aux postes 5 et 6 une couverture plastique, puis une couverture transparente qui protège la fiche d'identité du contenu du boîtier ou la photo quadrichromie ou la dorure à chaud par le robot (57). L'ensemble est ensuite mené au poste 8 où il est soudé sur ses cotés au moyen d'une soudeuse à haute fréquence (7).

Après l'opération de soudage, un ciseau ayant la forme extérieure du boîtier, découpe le plastique excédentaire qui reste accroché au boîtier. Au poste 9, un enrouleur extrait du boîtier le plastique découpé en excédant et l'enroule sur une bobine. Durant cette opération un manipulateur mécanique referme le boîtier en réunissant les dosserets qui s'emboîtent au niveau des épaulements. Le boîtier traité passe automatiquement sur un convoyeur (11) qui est constitué par un tapis roulant, pour être stocker dans le magasin (12).

La cadence et l'action des outils de transformation sont synchronisés par une transmission mécanique qui extrait le plastique thermoformé et commande l'avancement du boîtier.

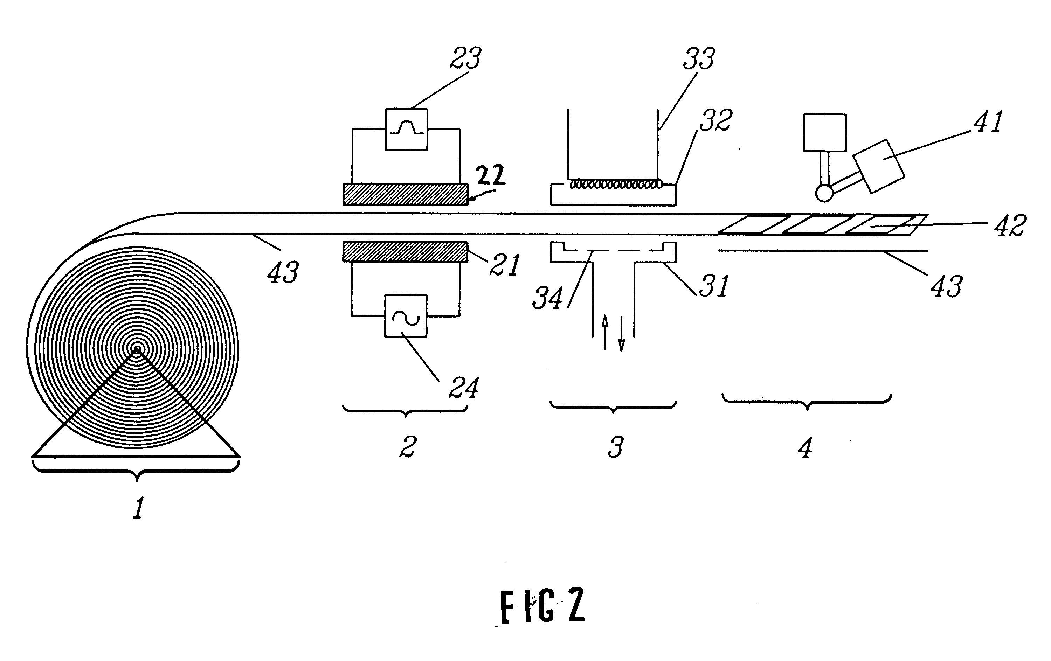

En se reportant à la figure 2 et selon une caractéristique importante de l'invention, on a représenté l'ensemble regroupant, le préchauffage et le thermo-

formage du plastique.

Un ruban (43) de plastique thermoformable (polyvinyle ou polystyrène) est stocké sous forme de ruban sur l'enrouleur (1). Ce plastique en ruban est tendu et subit un préchauffage au niveau (2). Ce préchauffage maintient le plastique à une température de 120 ° au moyen des plaques (22) et (21) à chauffage différentiel.

La plaque inférieure (21) est maintenue à une température constante de 120 / 130 ° au moyen de l'alimentation électrique (24); la plaque supérieure (22) est alimentée par une série d'impulsions thermoélectriques créée par le générateur électrique (23). Cette disposition permet de maintenir la base du ruban plastique suffisamment chaud pour être thermoformé correctement et rapidement.

Le ruban est ensuite tiré vers une presse à thermoformer. Cette presse est constituée par deux matrices (31) et (32) figurant en négatif, l'ensemble du boîtier de la vidéo cassette (42).

La matrice (32) supérieure est maintenue à la température de thermoformage au moyen d'une circulation d'eau (33). La matrice (31) recevant le corps moulé du boîtier de la vidéo-cassette après thermoformage est garnie d'orifices (34). Lorsque le plastique chaud arrive au niveau (3), la matrice (31) aspire ce plastique par les orifices (34) afin de plaquer ce dernier dans le moule. Dans un premier temps les matrices (32) et (31) se rejoignent fermant les deux couvertures du boîtier de la vidéo cassette; lorsque le thermoformage est achevé (matrices ouvertes) le refroidissement de la matrice supérieure permet d'extraire un boîtier par une pression d'air issue des orifices (34). A ce niveau le boîtier de la vidéo cassette (42) est pré formé refroidi à 16 ° et reçoit au moyen d'une distribution automatique cadencée les dosserets (41) destinés à la rigidité de la couverture. Le ruban au niveau (43) représente une série de boîtiers vidéo-cassette, moulés, coulés les uns aux autres par le ruban plastique excédentaire.

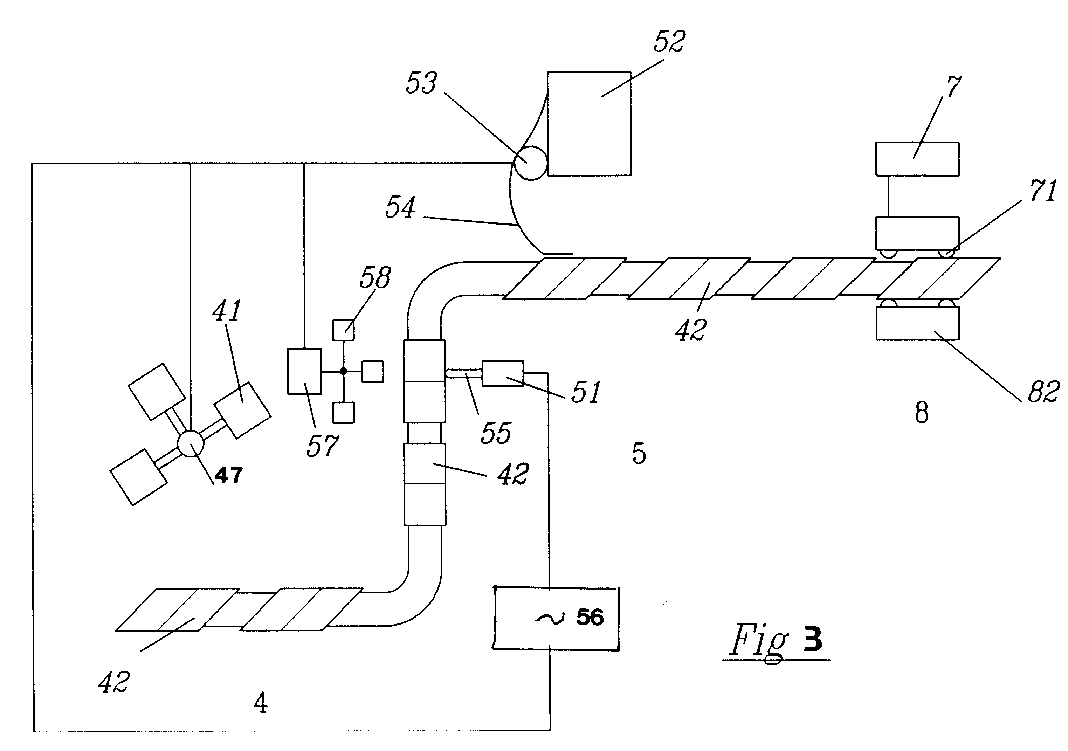

En se reportant à la figure 3 et selon une caractéristique revendiquée de l'invention on a représenté le poste de finition et des boîtiers vidéo cassettes (42).

Après avoir reçu leur dosseret cartonné (41) ces boîtiers (42) reçoivent à ce niveau un marquage au moyen d'un dispositif de dorure à chaud ou un photo quadrichromie (58) positionnée sur la couverture du boîtier vidéo-cassette au moyen d'un robot (57) qui extrait l'image quadrichromie une à une de la réserve. L'ensemble est synchronisé avec la cadence de fonctionnement de l'ensemble de l'installation au moyen d'une sonde (55) qui palpe constamment le train des boîtiers (42) et les repère.La couverture externe est complétée par un film translucide placé par un robot (52).

Ces alimentations en dosserets (41) de photos quadrichromie (58) sur le boîtier et l'application du film transparent (54) recouvrant la partie externe du boîtier sont synchronisées au moyen de robots commandés par une sonde (55).

Pour bien synchroniser l'ensemble de ces trois opérations, la sonde (55) palpe la bande continue des boîtiers (42) solidaires les uns des autres et les repère. Cette sonde alimente un solénoïde (51) qui commande l'alimentation électrique (56) des robots (57), (52) et (47). Ce moyen permet également de positionner les couvertures et leur revêtement et indique un défaut de moulage sans entraîner l'arrêt de l'ensemble du dispositif.

Le boîtier vidéo-cassette (42) ainsi garni s'achemine vers le thermo-soudeur à haute fréquence (8). Cette soudeuse à haute fréquence est maintenue constamment à 50°C afin d'accélérer la cadence de fabrication.

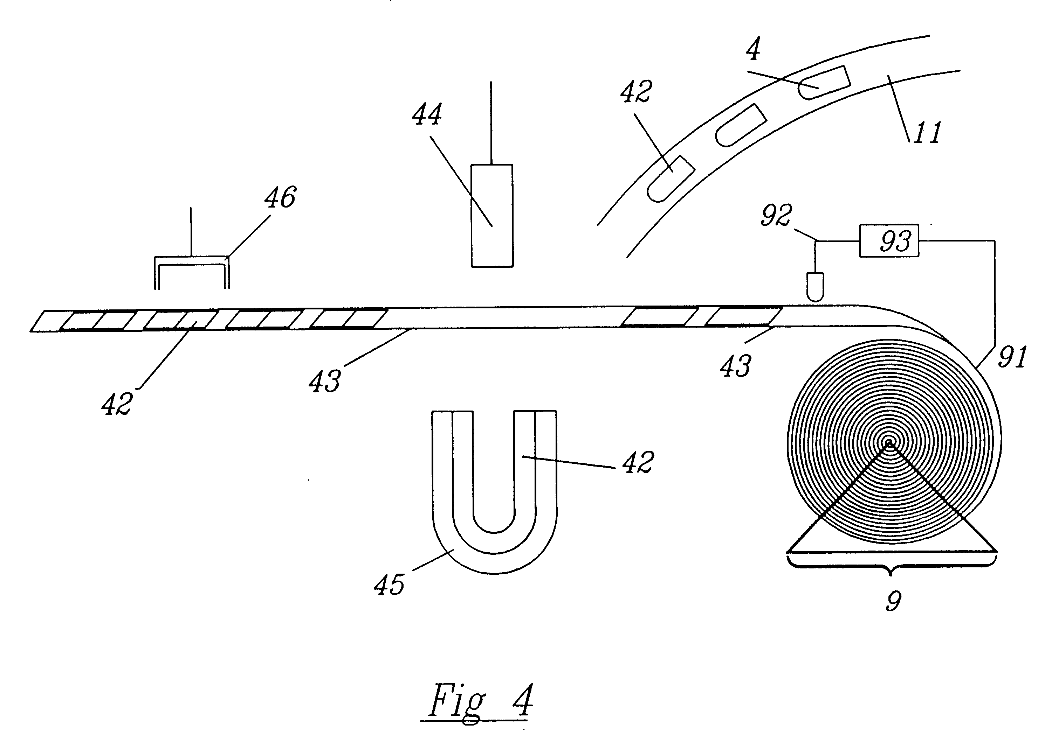

On a représenté sur la figure 4 les opérations de finition du boîtier vidéo cassette.

Le boîtier (42) est découpé par un emporte pièce (46) et isolé du ruban de plastique (43).

Le boîtier (42) est refermé par un moule en fer à cheval (45) dont la fermeture est guidée par la forme (44) placée au dessus qui chute à la cadence de fabrication et joue le rôle d'extracteur.

Les boîtiers (42) fermés sont extraits du ruban (43) et acheminés vers le stockage (11). Les déchets de plastique qui reliaient les boîtiers entre eux sont tirés vers un rouleau de stockage (91). Ce rouleau tourne au moyen d'un moteur (93) assurant la tension du ruban depuis le poste de thermoformage. La tension est maintenue constante quelque soit la variation du diamètre du rouleau (91) au moyen d'un palpeur (92) qui commande le couple du moteur (93) et la tension du film.

OPERATION DE FABRICATION DU BOITIER :

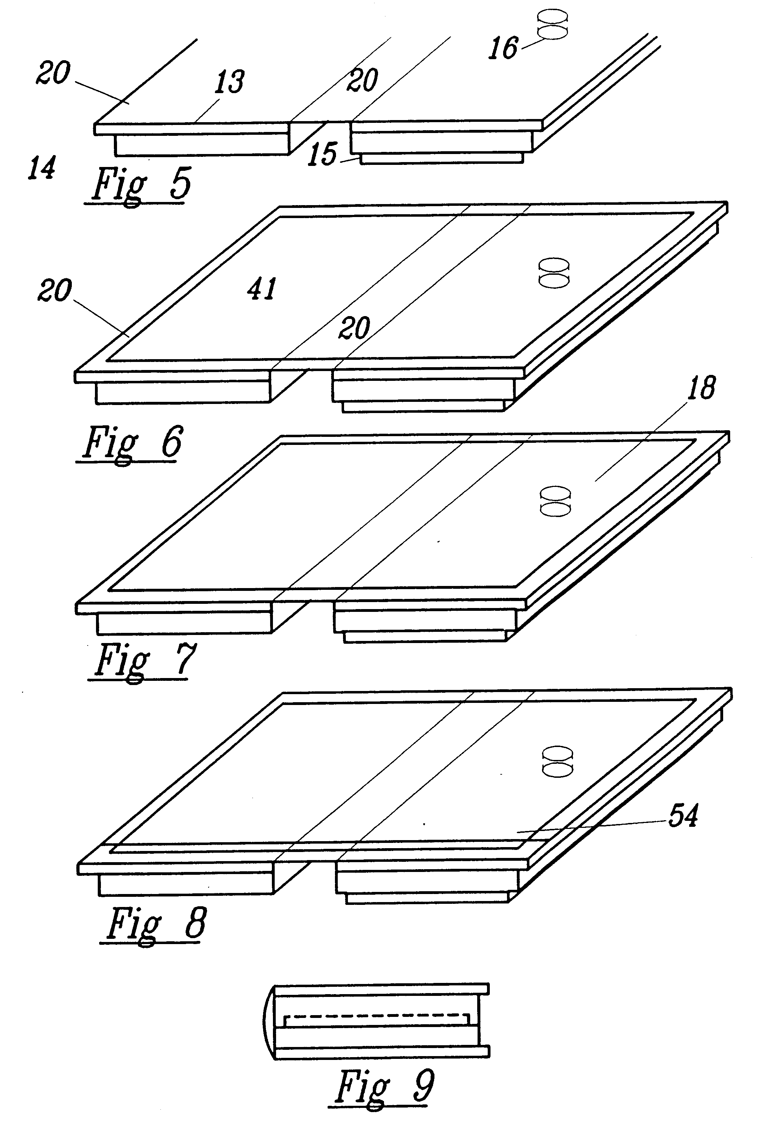

On a représenté sur les figures 5 à 9 (Pl V) les différentes opérations de transformation et de fabrication du boîtier.

En se référant à la planche V, on trouve, vu de coupe, sur la figure 2 l'action de thermoformage qui a pour fonction de réaliser le fond du boîtier. Celui-ci est obtenu au moyen d'une matrice qui moule un profil (13) correspondant aux deux parties du fond du boîtier réunies par un plastique souple. Le moulage façonne également les rainures (14) du couvercle, les rainures (15) de l'intérieur du boîtier les épaulements (20), le téton (16) servant à fixer la cassette. L'ensemble est présenté en relief sur la figure 5.

Les opérations 4 à 6 ont pour objet de placer les cartonnages (41) sur les épaulements (20) du fond du boîtier représenté à la figure 6.

L'opération 5 est destinée à placer les images quadrichromie.

L'opération dessinée aux figures 7 et 8 permet de placer une couverture (18) plastique et le film transparent (54) que l'on soude par haute fréquence sur le bord du boîtier afin d'enrober complètement les cartons (41) positionnés sur les couvertures. Le boîtier ainsi transformé est débarrassé des excès du plastique resté en bordure, puis refermé selon la figure finale 9.

## Revendications

**REVENDICATION 1 :** Nouveau dispositif de fabrication de boîtiers vidéo-cassettes en plastique caractérisé en ce qu'il comporte une alimentation plastique thermoformable, un poste de préchauffage différentiel, un poste de thermoformage à double poussée, un circuit de refroidissement du plastique, un distributeur de dosserets rigides, une presse à découper, un contrôleur de tension du ruban, un poste de soudure à haute fréquence , un extracteur du moulage et du ruban non utilisé, un enrouleur de déchets maintenant une tension mécanique d'extraction du ruban.

**REVENDICATION 2:** Nouveau dispositif de fabrication de boîtiers vidéo cassettes en plastique thermoformable, selon la revendication 1 caractérisé en ce que la cadence est assurée par le préchauffage du ruban plastique obtenu au moyen de deux plaques (21) et (22) entre lesquelles circulent un ruban, la plaque inférieure (21) est maintenue à une température constante par un générateur électrique (2) la plaque supérieure (22) est alimentée par des impulsions électrothermiques à la vitesse de déroulement du ruban (43) et issue d'un générateur impulsionnel électrique (23).

**REVENDICATION 3:** Nouveau dispositif de fabrication de boîtiers vidéo-cassettes en plastique thermoformable selon la revendication 1 caractérisé en ce que le moulage et le démoulage de qualité est obtenu au moyen de deux matrices (31) et (32) qui se ferment et s'ouvrent à la cadence d'avancement du ruban plastique (43), la matrice inférieure (31) recevant le plastique est pourvu d'orifices de succion au moment du moulage et d'éjection d'air au moment du démoulage , la matrice (32) est thermostatée par une circulation d'eau (33) pour durcir le plastique.

**REVENDICATION 4 :** Nouveau dispositif de fabrication de boîtiers vidéocassettes en plastique thermoformable selon la revendication 1 caractérisé en ce le film translucide protecteur (54) est plaqué sur le boîtier (42) au moyen d'un robot mécanique (52) commandé par un palpeur (55) appréciant la tension du ruban (43) portant le moule des boîtiers (42) et informant par l'intermédiaire d'un solénoïde (51) à champ d'induction variable les robots (47, 57 et 52) de l'avancement du ruban (43).

**REVENDICATION 5 :** Nouveau dispositif de fabrication de boîtiers vidéo-cassettes en plastique thermoformable selon la revendication 1, caractérisé en ce que la cadence de fabrication est assurée par une extraction continue du ruban plastique (43) qui est stocké au moyen d'un enrouleur (91) mû par un moteur (93) piloté par un palpeur mécanique (92), ce dernier contrôle la tension d'extraction du ruban (43) qui est proportionnelle à la cadence de fabrication des boîtiers (42), ceux-ci fermés sont stockés à part.

**REVENDICATION 6 :** Nouveau dispositif de fabrication de boîtiers vidéo-cassettes en plastique thermoformable selon la revendication1, caractérisé en ce que le moyen de caractériser chaque boîtier par une photo quadrichromie est une sonde (55) qui palpe la bande de plastique constituant la série de boîtier (42) soudés les uns aux autres; cette sonde (55) commande un solénoïde (51) qui en faisant varier l'alimentation électrique des robots (57), (52) et (47) pilote et synchronise le positionnement des dosserets (42), des photos quadrichromie (58) et du film translucide (54) à la cadence de fonctionnement du dispositif.

*Fig 1*

FIG 2

EP 0 497 656 A1

Fig 3

*Fig 4*

EP 0 497 656 A1

Fig 5

Fig 6

Fig 7

Fig 8

Fig 9

EP 0 497 656 A1

Office européen
des brevets

**RAPPORT DE RECHERCHE EUROPEENNE**

Numero de la demande

EP 92 40 0148

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 555 290 (H. GRAETZ et al.) * Figures 1-9; revendications 1,5,11,13; colonne 1, ligne 56 - colonne 3, ligne 16; colonne 5, lignes 12-45; colonne 5, ligne 64 - colonne 6, ligne 60 * | 1-6 | B 29 C 51/18 G 11 B 23/023 |
| A | US-A-4 407 410 (H. GRAETZ et al.) * Figures 1-11; colonne 1, ligne 37 - colonne 2, ligne 26 * | 1-4,6 | |
| A | US-A-4 966 283 (P.K. SYKES et al.) * Figures 3,5; revendication 5; colonne 3, lignes 26-40 * | 1-4,6 | |
| A | AU-B- 539 485 (SAGAMORE INDUSTRIES PTY LTD) * Figures 1-3; page 4, paragraphes 2-3,6-7; page 10, paragraphe 1 * | 1-4,6 | |
| A | DE-B-1 145 784 (J.G.H. OLLIER et al.) * Le document en entier * | 1-6 | DOMAINES TECHNIQUES RECHERCHES (Int. Cl.5) |
| A | DE-A-2 146 835 (GANZHORN et al.) * Figures 1-5; revendications 1,2,5; page 2, paragraphe 1; page 4, paragraphes 3,4 * | 1-4,6 | G 11 B B 29 C B 65 B |
| A | US-A-3 029 007 (C. HEPNER) * Figures 1-9,26,27; colonne 1, ligne 9 - colonne 2, ligne 30; colonne 4, ligne 70 - colonne 6, ligne 12; colonne 16, ligne 60 - colonne 17, ligne 16 * -/- | 1-6 | |

Le présent rapport a été établi pour toutes les revendications

| Lieu de la recherche | Date d'achèvement de la recherche | Examinateur |
|---|---|---|
| LA HAYE | 08-05-1992 | KOSICKI T.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

10

Office européen
des brevets

**RAPPORT DE RECHERCHE EUROPEENNE**

Numero de la demande

EP 92 40 0148

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 767 349 (A.D. JEZUIT)<br>* Figures 1,2,3,5; revendications 1,7,12; colonne 1, ligne 60 - colonne 2, ligne 28; colonne 3, lignes 30-65; colonne 4, lignes 50-62 *<br>----- | 1-6 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 08-05-1992 | KOSICKI T.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)